# EUROPEAN PATENT APPLICATION

(11) **EP 1 175 018 A1**
(43) Date of publication of application: **23.01.2002**
(21) Application number: 01000300.2
(22) Date of filing: 17.07.2001
(51) Int. Cl.: H04B 1/40

(54) **Multimode front end and wireless communication apparatus**

(30) Priority: 19.07.2000 FI 20001686
(71) Applicant: NOKIA MOBILE PHONES LTD., 02150 Espoo (FI)
(72) Inventor: Lehtinen, Otto, 21200, Raisio (FI)
(74) Representative: Peltonen, Antti Sakari

(57) **Abstract**

A multimode front end for a wireless communication apparatus, which communication apparatus is arranged for at least time division duplex, TDD, and frequency division duplex, FDD, types of signals, the front end comprising a reception chain (RX) for processing received FDD and TDD signals; a transmission chain (TX) for creating FDD and TDD signals to be transmitted; transmission means (5, 6) for receiving and transmitting signals; and a duplex filter (4, 10, 22) for filtering the FDD transmission band and FDD reception band and for separating them from each other, which duplex filter is functionally connected to the transmission means (5, 6), reception chain (RX) and transmission chain (TX). The invention is characterized by at least one pair of TDD reception filter - TDD transmission filter (24, 27; 25, 23), which filters are arranged on a common frequency band and functionally connected to the transmission/reception means (5, 6), the TDD reception filter (24, 25) being functionally connected to the reception chain (RX) and the transmission chain (RX) being functionally connected to the TDD transmission filter (23, 27).

## Description

### BACKGROUND OF THE INVENTION

The invention relates to a multimode front end, and a wireless communication apparatus comprising such a multimode front end, particularly when time division duplex TDD and frequency division duplex FDD are used. A multimode front end refers in this connection to such a front end that is applicable to reception and transmission of signals using different duplexing and/or multiplexing methods and possibly to reception and transmission of signals according to different mobile communication systems.

In the FDD, the transmission and reception of signals take place on separate frequency bands, in other words signals are distinguished from each other relative to the frequency, whereas in the TDD, the same frequency band is used both for transmission and reception, and the signals are distinguished from each other relative to time. In third generation mobile communication systems, such as in the UMTS (Universal Mobile Telecommunication System), both duplexing methods can be used. Therefore, there is a need for provision of such solutions that enable the use of both duplexing methods in the same terminal. Further, it is preferable to be able to combine the TDD and FDD signals in a single transmission and reception branch in the terminal in order to minimize the number of components. Seen from the terminal, the FDD transmission band in the UMTS is 1,920 to 1,980 MHz and the FDD reception band is 2,110 to 2,170 MHz. Two frequency ranges are reserved for the TDD operation: TDD 1 on a frequency band of 1,900 - 1,920 MHz and TDD2 on a frequency band of 2,010 to 2,025 MHz. This document concentrates on the description of constructions in connection with the UMTS, but it is to be noted that such constructions may be applicable to any other system as well.

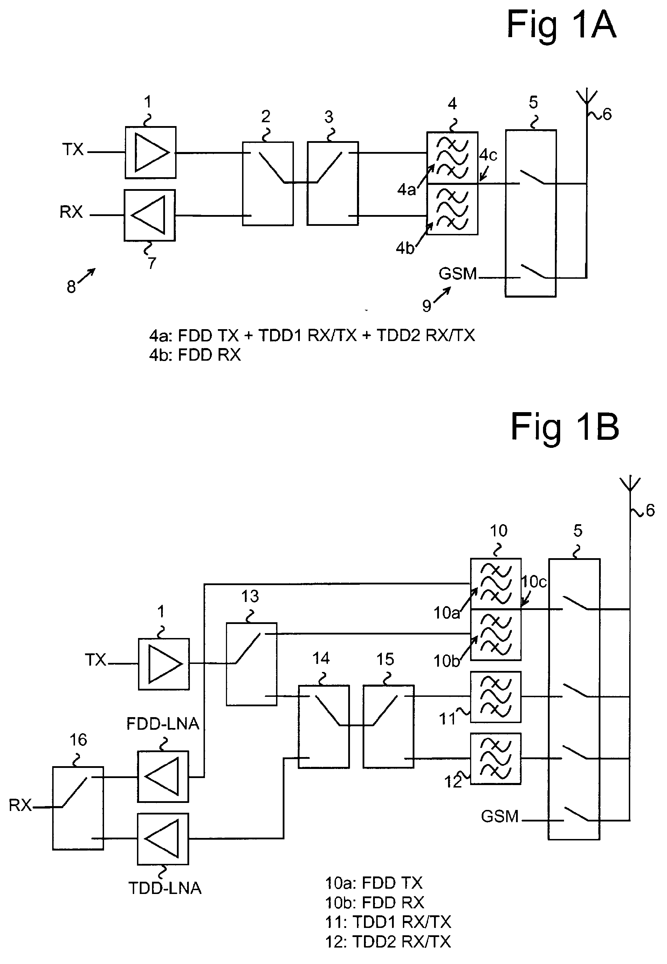

Figure 1A shows a circuit according to the prior art for combining the TDD and FDD functions in a single apparatus and in a single transmission and reception branch. The output of an amplifier 1 provides a TDD or FDD signal formed in a transmission branch TX (not shown in the figure), which signal is connected to a duplex filter 4 with switches 2 and 3.

A duplex filter is a three-gate component that comprises separate filters 4a and 4b for the transmission and reception sides and distinguishes the transmission and reception signals at different frequencies from each other. The filters 4a and 4b of the transmission and reception sides can be tuned to a desired frequency range. Since in the UMTS the TDD bands (TDD1 and TDD2) and the FDD transmission band are close to each other, the circuit of Figure 1A utilizes the transmission side filter 4a of the duplex filter for FDD transmission, and in addition, both for TDD reception and TDD transmission on both TDD bands, and the filter 4b of the reception side is used for FDD reception only. In other words, the transmission side 4a of the duplex filter is tuned to a frequency range of 1,900 to 2,025 MHz, the reception side 4b being tuned to a frequency range of 2,110 to 2,170 MHz.

The antenna gate 4c of the duplex filter is connected to an antenna switch 5, with which the above-described FDD/TDD transmission and reception branch 8 or a transmission and reception branch 9 arranged in another mobile communication system, such as the GSM (Global System for Mobile Communication), is connected to the antenna 6.

When an FDD signal is received, the reception side 4b of the duplex filter 4 is connected with switches 2 and 3 to an LNA amplifier (Low Noise Amplifier) 7 of the reception branch and further to the reception chain RX, which is not shown in the figure. When a TDD signal is received, in turn, the transmission side 4a of the duplex filter 4 is used, being connected to the LNA amplifier 7 of the reception branch with switches 2 and 3.

The problem with the above-described arrangement is that the switches 2 and 3 are not ideal, but power leaks from the transmission side to the reception side, whereby the distinction of the received signal from noise becomes significantly more difficult. When several switches are concatenated in series on the signal path, isolation between the transmission and reception branches is improved, but at the same time, insertion loss is also increased, which, in turn, weakens the sensitivity of the reception side and increases the noise figure. This problem could be solved by using an expensive and complex switch, which is not, however, a feasible solution in most applications.

Further, designing a duplex filter arranged on both the TDD and FDD bands is not necessarily simple. Figure 1B shows a second circuit according to the prior art, eliminating this problem. In this circuit, a duplex filter 10 is only used for the FDD transmission and reception, and separate band-pass filters 11 and 12 have been added for the TDD bands TDD1 and TDD2, respectively. The filter 11 is thus tuned to a frequency range of 1,900 to 1,920 MHz, and the signals of the TDD1 band are both received and transmitted through it. Correspondingly, the filter 12 is tuned to a frequency range of 2,010 to 2,025, and the signals of the TDD2 band are both received and transmitted through it. The antenna gate 10c of the duplex filter and the filters 11 and 12 are connected to an antenna switch 5, with which the desired branch is connected to an antenna 6 in the same way as in connection with Figure 1A.

A switch 13 allows the selection of an FDD transmission signal to be connected the duplex filter 10 or a TDD transmission signal to be connected to one of the TDD filters 11 and 12, the signal being received from the output of the amplifier 1. The selection of the TDD filter is performed with switches 14 and 15 between the TDD filter and the switch 13.

The reception side of the duplex filter 10 is connected to an amplifier FDD-LNA. When a TDD signal is received, the TDD filter in question is connected with the switches 11 and 12 to the amplifier TDD-LNA of the reception branch. The FDD-LNA and TDD-LNA outputs of the amplifiers are further connected to a single reception chain RX with a switch 16.

The problem with the circuit of Figure 1B is still that the switches are unideal, in other words the switches leak, and as a result, isolation is weakened between the transmission and reception sides. For instance, an FDD transmission signal can leak through the switches 13 and 14 to the TDD-LNA and further through the switch 16 to the FDD reception side, and thus it deteriorates the properties of the reception side. In addition, several switches on the signal path increase the insertion loss, because higher power levels are required to cancel the attenuation caused by the switches.

### BRIEF DESCRIPTION OF THE INVENTION

An object of the invention is thus to provide a multimode front end in such a way that above problems can be alleviated. The objects of the invention are achieved with a front end and a wireless communication apparatus, which are characterized by what is stated in the independent claims. Preferred embodiments of the invention are disclosed in the dependent claims.

The idea of the invention is to use separate band-pass filters for the TDD transmission side and the TDD reception side sharing a common frequency band. In principle, this results in two similar filters being required for one TDD band. By doubling the number of filters, the isolation between the transmission and reception sides can be improved, however, because in the solution according to the invention, the power of the transmission side is not coupled to the reception side through switches but only through filters. The interference power coupled through the filters is not a problem, because the filters must be designed even because of the normal operation to sufficiently attenuate interference from the adjacent channel. In other words, the filters attenuate the interference power from the transmission side to the reception side to such an extent that this interference power is not detrimental for the reception. Furthermore, properties of separate reception and transmission filters can be optimized separately to be suitable for reception and transmission, in specific. On the reception side it is preferable to optimize the filter relative to attenuation, whereas on the transmission side the filter can be optimized relative to power tolerance.

The invention minimizes the number of switches on the signal path to improve the isolation between the transmission and reception paths and to minimize the insertion loss. In solutions according to the preferred embodiments of the invention, the signal path has a maximum of one switch.

The multimode front end according to the invention for a wireless communication apparatus comprises a reception chain for processing the received FDD and TDD signals and a transmission chain for creating the FDD and TDD signals to be sent. The signals are received and transmitted with an antenna, which is connected to the antenna switch, by means of which, in turn, the transmission and reception branch is selected. The FDD signals are transmitted and received through a duplex filter. The duplex filter filters the FDD transmission band and the FDD reception band and separates them from each other, being functionally connected to the antenna switch, reception chain and transmission chain.

A front end for TDD operation comprises at least one pair of TDD reception filter - TDD transmission filter, which filters are arranged on a common frequency band and functionally connected to the antenna switch, the TDD reception filter being functionally connected to the reception chain and the transmission chain being functionally connected to the TDD transmission filter.

A wireless communication apparatus according to the invention, which is arranged for at least signals of a TDD and FDD type, comprises a front end similar to that described above.

An advantage of the invention is thus improvement of the isolation between the transmission and reception sides and reduction of insertion loss caused by components without expensive and complex switches being required. Further, the circuit according to the invention is simple and can be implemented with a small number components. Although more filters than previously are required, the number of switches is correspondingly reduced.

### LIST OF DRAWINGS

The invention will now be described in more detail in connection with preferred embodiments, with reference to the attached drawings, of which:

Figure 1 shows a circuit according to the prior art;

Figure 1 B shows a second circuit according to the prior art;

Figure 2 shows a circuit according to an embodiment of the invention;

Figure 3 shows a circuit according to a second embodiment of the invention.

### DETAILED DESCRIPTION OF THE INVENTION

For the sake of illustration, the invention will be described in the following in connection with the UMTS system without, however, confining the application of the invention to this system only.

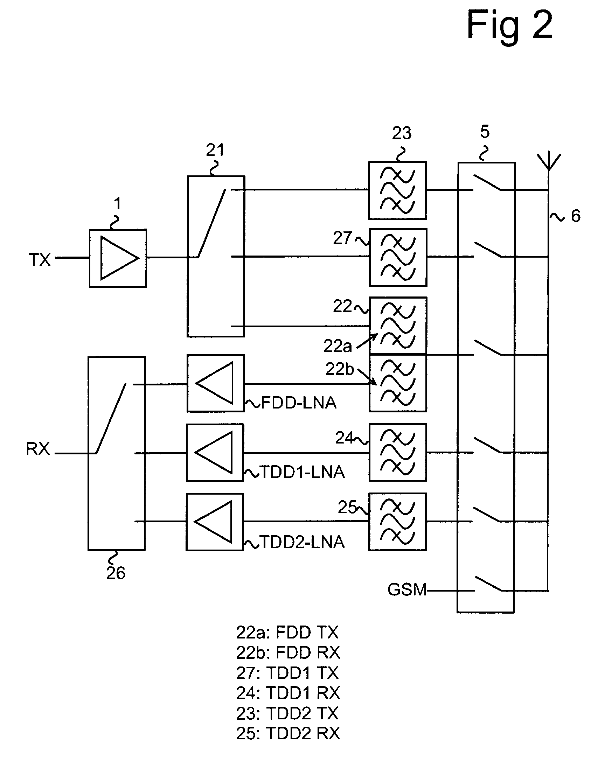

Figure 2 shows a circuit according to a preferred embodiment of the invention. An antenna switch 5 and an antenna 6, which form transmission/reception means, are arranged in the same way as in Figures 1A and 1B according to the prior art. At its simplest, the transmission/reception means can be one antenna arranged for several frequency ranges, in which case no separate antenna switch is required. Alternatively, the transmission/reception means can be implemented with a plurality of different antennas, in other words, instead of connection to an antenna switch, each branch is connected to a separate antenna arranged for each particular branch. Corresponding to Figure 1B, a duplex filter 22 is only used for the FDD transmission and reception, in other words its transmission side 22a is arranged on a frequency band of 1,920 to 1,980 MHz and the reception side 22b on a frequency band of 2,110 to 2,170 MHz. However, at least twice as many band-pass filters are arranged for the TDD bands as in Figure 1B. Filters 27 and 24 are arranged for the TDD1 band, i.e. in a frequency range of 1,900 to 1,920 MHz, filters 23 and 25 being arranged on the TDD2 band, i.e. in a frequency range of 2,010 to 2,025 MHz. The filters 27 and 23 are used for the transmission of TDD signals, the filters 24 and 25 being used for the reception of the TDD signals. The antenna gate of the duplex filter 22 and all four band-pass filters 23, 24, 25 and 27 are connected to the antenna switch 5, by means of which the desired branch is connected to the antenna 6.

On the transmission side, a switch 21 allows the selection of an FDD transmission signal to be connected to the duplex filter 22 or a TDD transmission signal to be connected to one of the TDD filters 27 and 23, the signal being received from the output of the amplifier 1 and formed in the transmission chain TX.

The reception side 22b of the duplex filter 22 is connected to an amplifier FDD-LNA. The TDD filters 24 and 25 on the reception side are correspondingly connected to amplifiers TDD1-LNA and TDD2-LNA. The outputs of the amplifiers FDD-LNA, TDD1-LNA and TDD2-LNA are further connected to a single reception chain RX with a switch 26. Thus, the transmission side of the front end comprises only one switch 21, and the reception side comprises only one switch 26.

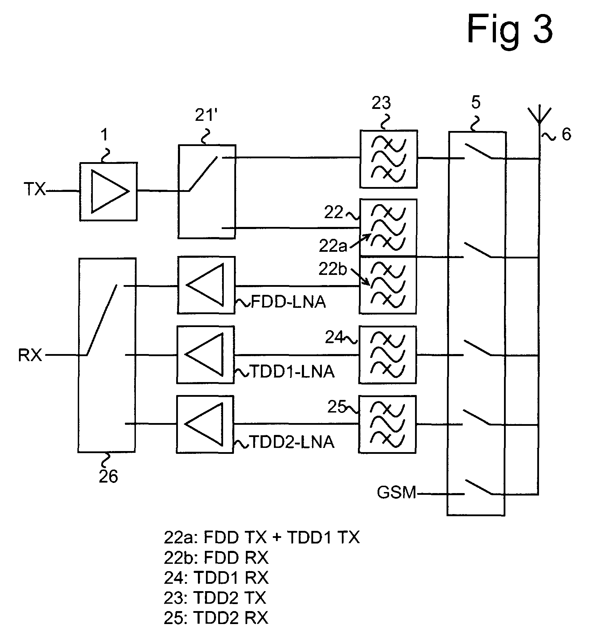

Figure 3 shows a circuit according to a second embodiment of the invention, corresponding to a great extent to the embodiment according to Figure 2. In this embodiment, the transmission side 22a of the duplex filter is used for both FDD transmission and transmission on the TDD1 band of the UMTS, in other words the transmission part of the duplex filter is arranged on a frequency band 20 MHz wider than in the solution of Figure 2. Thus, the filter 27 of Figure 2 is not needed. The frequency band of the transmission side of the duplex filter 22 must be arranged to be 1,900 to 1,980 MHz, but this does not impose too great limitations on the filter structure and can be implemented with the present-day technology. As regards its operation and properties, the circuit of Figure 3 corresponds to the circuit of Figure 2, in other words it can achieve the same advantages as the circuit of Figure 2.

It is obvious to a person skilled in the art that with the advance of technology, the basic idea of the invention can be implemented in a plurality of ways. The invention and the embodiments thereof are thus not confined to the examples described above but can vary within the scope of the claims.

## Claims

1. A multimode front end for a wireless communication apparatus, which communication apparatus is arranged for at least time division duplex, TDD, and frequency division duplex, FDD, types of signals, the front end comprising
a reception chain (RX) for processing received FDD and TDD signals;
a transmission chain (TX) for creating FDD and TDD signals to be transmitted;
transmission/reception means (5, 6) for receiving and transmitting signals;
a duplex filter (4, 10, 22) for filtering the FDD transmission band and the FDD reception band and for separating them from each other, which duplex filter is functionally connected to the transmission/reception means (5, 6), reception chain (RX) and transmission chain (TX);
**characterized by**
at least one pair of TDD reception filter - TDD transmission filter (24, 27; 25, 23), which filters are arranged on a common frequency band and functionally connected to the transmission/reception means (5, 6), the TDD reception filter (24, 25) being functionally connected to the reception chain (RX) and the transmission chain (RX) being functionally connected to the TDD transmission filter (23, 27).

2. A front end according to claim 1, **characterized in that** the TDD transmission filter is the transmission side (22a) of the duplex filter (22).

3. A front end according to claims 1 or 2, **characterized by** a first selection switch (21, 21') for connecting one common TDD/FDD transmission chain (TX) to one transmission filter (22, 23, 27).

4. A front end according to any one of claims 1 to 3, **characterized by** a second selection switch (26) for connecting one reception filter (22, 24, 25) to one common TDD/FDD reception chain (RX).

5. A front end according to any one of claims 1 to 4, **characterized in that** the transmission/reception means comprise an antenna (6) for receiving and transmitting signals and antenna switch (5) connected to the antenna for selecting the transmission and reception branch and for connecting it to the antenna (6).

6. A front end according to any one of claims 1 to 4, **characterized in that** the transmission/reception means comprise an antenna (6) arranged for at least two frequency ranges for receiving and transmitting signals.

7. A front end according to any one of claims 1 to 4, **characterized in that** the transmission/reception means comprise at least two separate antennas (6) arranged for different frequency ranges for receiving and transmitting signals.

8. A wireless communication apparatus, which is arranged for at least time division duplex, TDD, and frequency division duplex, FDD, types of signals and which comprises a front end comprising
a reception chain (RX) for processing the received FDD and TDD signals;
a transmission chain (TX) for creating FDD and TDD signals to be transmitted;
transmission/reception means (5, 6) for receiving and transmitting signals;
a duplex filter (4, 10, 22) for filtering the FDD transmission band and the FDD reception band and for separating them from each other, which duplex filter is functionally connected to the transmission/reception means (5, 6), reception chain (UTRX RX) and transmission chain (UTRA TX)
**characterized in that** said front end comprises
at least one pair of TDD reception filter - TDD transmission filter (24, 27; 25, 23), which filters are arranged on a common frequency band and functionally connected to the transmission/reception means (5, 6), the TDD reception filter (24, 25) being functionally connected to the reception chain (RX) and the transmission chain (RX) being functionally connected to the TDD transmission filter (23, 27).
